**Europäisches Patentamt**

**European Patent Office**

**Office européen des brevets**

(19)

(11) Numéro de publication: **0 192 549**
**B1**

(12)                    **FASCICULE DE BREVET EUROPÉEN**

(45) Date de publication du fascicule du brevet:
**10.08.88**

(51) Int. Cl.⁴: **B 60 R 1/02**

(21) Numéro de dépôt: **86400260.5**

(22) Date de dépôt: **07.02.86**

(54) **Dispositif antivibratoire pour miroir de rétroviseur de véhicule.**

(30) Priorité: **22.02.85 FR 8502580**

(43) Date de publication de la demande:
**27.08.86 Bulletin 86/35**

(45) Mention de la délivrance du brevet:
**10.08.88 Bulletin 88/32**

(84) Etats contractants désignés:
**DE GB IT NL SE**

(56) Documents cité:
**EP-A-0 099 216**

(73) Titulaire: **Manzoni- Bouchot Société anonyme dite:, Zone Industrielle "Le Plan d'Acier" Boîte Postale No 9, F-39200 Saint- Claude (FR)**

(72) Inventeur: **Manzoni, Stéphane, 1, rue Pasteur, F-39200 Saint- Claude (FR)**

(74) Mandataire: **Caunet, Jean, Cabinet BEAU DE LOMENIE 55, rue d'Amsterdam, F-75008 Paris (FR)**

LIBER, STOCKHOLM 1988

EP 0 192 549 B1

## Description

La présente invention concerne un dispositif antivibratoire pour miroir de rétroviseur de véhicule, selon le préambule de la revendication 1 et connu par example par le document EP-A-0 099 216.

Les rétroviseurs, qui comportent des miroirs mobiles angulairement à l'intérieur de leur boîtier de support et qui sont manoeuvrés pour leur réglage de l'extérieur ou de l'intérieur du véhicule, présentent l'inconvénient que le miroir qui est soumis à des vibrations parasites donne une image floue, "tremblée" qui nuit à une vision correcte.

Ces dispositifs pour l'élimination des vibrations comportent en général des organes élastiques disposés entre le porte-miroir et le boîtier. Ces organes antivibratoires sont constitués soit par des épingles à contrainte de torsion, soit par des lames travaillant en compression et en friction (EP-A-0 099 216).

Chaque organe antivibratoire est composé d'un élément flexible qui vient en appui coulissant sur la face intérieure de la coupelle et d'un autre élément assujetti à l'arrière de l'organe de support du miroir.

Toutefois ces dispositifs sont efficaces sur les rétroviseurs dont le miroir se déplace à l'intérieur du boîtier sans que le bord dudit miroir ne dépasse la bordure extérieure du boîtier.

Or pour certains types de rétroviseurs il peut se produire que dans ses positions extrêmes le miroir dépasse la bordure du boîtier et dans ce cas l'organe élastique ne serait plus en contact avec la paroi intérieure du boîtier, de telle sorte que l'amortissement du miroir deviendrait inexistant. La présente invention a pour objet un dispositif antivibratoire qui permet de remédier à cet inconvénient.

Conformément à la présente invention le support de miroir comporte sur sa face arrière un bossage s'étendant perpendiculairement à ladite face et qui est engagé entre deux branches élastiques d'un organe amortisseur monté coulissant librement sur le fond du boîtier suivant un axe sensiblement perpendiculaire à l'axe dudit bossage.

Le dispositif suivant l'invention qui est très simple permet d'assurer un maintien efficace du miroir donnant une image correcte, même lorsque le miroir dépasse la bordure du boîtier dans ses positions extrêmes.

L'invention sera mieux comprise à la lecture de la description qui va suivre d'un mode de réalisation et en se référant aux dessins annexés, sur lesquels:

- la figure 1 est une vue en élévation de face du rétroviseur dont le miroir a été enlevé, et qui est muni du dispositif antivibratoire suivant l'invention;
- la figure 2 est une vue en coupe du rétroviseur suivant la ligne II-II de la figure 1, le miroir étant monté sur le boîtier;
- la figure 3 est une vue en coupe du rétroviseur suivant la ligne III-III de la figure 1; et
- la figure 4 est une vue en élévation de l'organe amortisseur ou épingle.

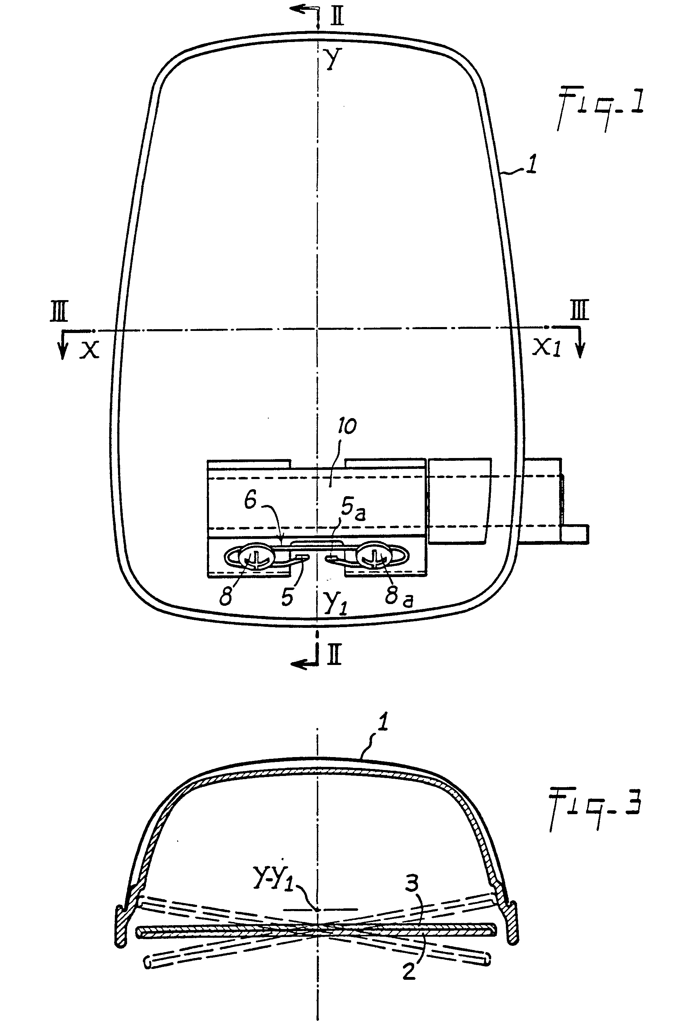

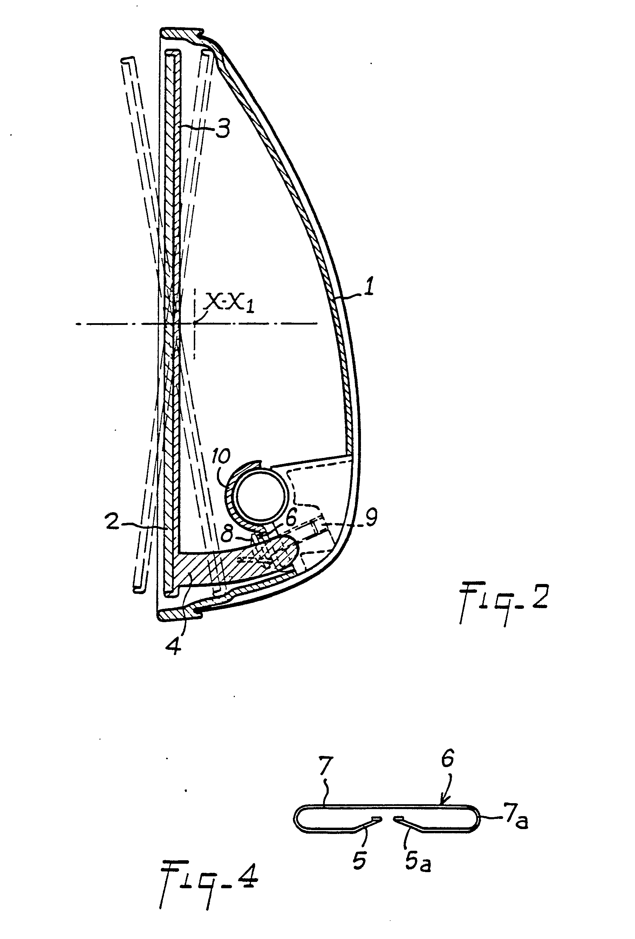

Aux figures 1, 2 et 3 on a représenté un boîtier de rétroviseur 1 dans lequel est monté pivotant autour de deux axes perpendiculaires $XX_1$ et $YY_1$ un miroir 2 qui est monté sur une plaque de support 3 reliée de façon connue à un mécanisme de commande à distance, non représenté au dessin et qui permet d'orienter le miroir 2 dans toutes les directions. A la base de la plaque de support 3 il est prévu un bossage constitué d'une tige plate 4 courbée, s'étendant perpendiculairement à la surface de ladite plaque de support, ladite tige plate 4 étant engagée entre les branches élastiques 5, 5a d'un organe amortisseur 6 monté sur le fond du boîtier 1.

L'organe amortisseur 6 présente une forme voisine de celle d'une épingle de sureté. Elle est réalisée en fil d'acier (figures 1 et 4) et comporte deux boucles 7, 7a, qui sont montées coulissantes sur les tiges de deux vis 8, 8a (figures 1 et 2) fixées dans des trous taraudés 9 ménagés dans la paroi du boîtier.

Entre le fond du boîtier 1 et l'organe amortisseur 6 est montée une plaque métallique 10 contre laquelle se déplace ledit organe amortisseur. Les boucles 7, 7a de l'organe amortisseur ou de l'épingle 6 sont reliées entre elles d'un côté et de l'autre côté elles présentent les branches élastiques 5, 5a (figure 4) qui sont repliées pour former une entrée au bossage 4 qui est engagé dans l'espace ménagé entre les branches 5, 5a de l'épingle 6.

De cette manière, l'organe amortisseur ou épingle 6 est monté librement coulissant sur les vis 8, 8a suivant un axe parallèle à l'axe $XX_1$ et perpendiculaire au bossage 4, de telle sorte que lors d'un déplacement du miroir autour de l'axe $YY_1$ le bossage 4 se déplace avec l'épingle 6, tout en restant maintenu serré entre les branches 5, 5a qui assurent le maintien de l'ensemble pour empêcher les vibrations du miroir. Si le miroir se déplace suivant l'axe $XX_1$, le bossage 4 peut coulisser d'avant en arrière entre les branches 5, 5a de l'organe amortisseur 6, tout en restant maintenu serré entre les branches 5, 5a qui assurent le maintien de l'ensemble pour empêcher les vibrations du miroir. Ainsi dans n'importe quelle position du miroir 2 celui-ci se trouve maintenu pour empêcher toute vibration.

## Revendications

1. Dispositif antivibratoire pour miroir de rétroviseur monté pivotant suivant deux axes perpendiculaires à l'intérieur d'un boîtier fixé sur la carrosserie d'un véhicule, caractérisé en ce que le support (3) de miroir (2) comporte sur sa face arrière un bossage (4) s'étendant perpendiculairement à ladite face et qui est engagé entre deux branches élastiques (5, 5a) d'un organe amortisseur (6) monté coulissant librement sur le fond du boîtier (1) suivant un axe sensiblement perpendiculaire à l'axe dudit bossage (4).

2. Dispositif suivant la revendication 1, caractérisé en ce que le bossage (4) est disposé à la partie inférieure du support (3) de miroir et il est constitué d'une tige plate engagée entre les branches élastiques (5, 5a) de l'organe amortisseur (6).

3. Dispositif suivant la revendication 1, caractérisé en ce que l'organe amortisseur (6) est constitué d'une épingle en fil d'acier présentant deux boucles (7, 7a) qui sont montées coulissantes sur les tiges de deux vis (8, 8a) fixées sur le fond du boîtier (1), lesdites boucles (7, 7a) étant reliées entre elles et présentant deux branches élastiques (5, 5a) délimitant entre elles un espace dans lequel est engagé le bossage (4) solidaire du support (3) de miroir.

**Patentansprüche**

1. Vibrationshemmende Vorrichtung für Rückspiegel, welche schwenkbar entlang zweier senkrechter Achsen im Inneren eines an der Karosserie eines Fahrzeugs befestigten Gehäuses montiert ist, dadurch gekennzeichnet, daß der Träger (3) des Spiegels (2) an seiner Hinterseite einen sich senkrecht zu besagter Seite erstreckenden Vorsprung (4) umfaßt, der zwischen zwei elastischen Armen (5, 5a) eines Dämpfungsorgans (6) eingesetzt ist, welches frei am Boden des Gehäuses (1) entlang einer zur Achse des Vorsprunges (4) im wesentlichen senkrechten Achse gleitend gelagert ist.

2. Vorrichtung nach Anspruch 1, dadurch gekennzeichnet, daß der Vorsprung (4) am unteren Teil des Trägers (3) des Spiegels angeordnet und durch eine zwischen den nachgiebigen Armen (5, 5a) des Dämpfungsorgans (6) eingesetzte flache Stange gebildet ist.

3. Vorrichtung nach Anspruch 1, dadurch gekennzeichnet, daß das Dämpfungsorgan (6) durch eine Klammer aus Stahldraht gebildet ist, die zwei Schleifen (7, 7a) umfaßt, welche gleitend an den Schäften zweier am Boden des Gehäuses (1) befestigter Schrauben (8, 8a) montiert sind, wobei die Schleifen (7, 7a) miteinander verbunden sind und zwei nachgiebige Arme (5, 5a) aufweisen, die zwischen ihnen einen Raum begrenzen, in welchem der mit dem Träger (3) des Spiegels einstückige Vorsprung (4) eingesetzt ist.

**Claims**

1. Anti-vibration device for a rearview mirror mounted for pivoting about two perpendicular axes inside a housing fixed on the bodywork of a vehicle, characterized in that the support (3) of the mirror (2) has on its rear face a boss (4) extending perpendicularly to the face and which is engaged between two elastic branches (5, 5a) of a dampening member (6) mounted for free sliding on the bottom of the housing (1) along an axis substantially perpendicular to the axis of the boss (4).

2. Device according to claim 1, characterized in that the boss (4) is placed at the lower part of said mirror support (3) and further comprises a flat rod engaged between the elastic branches (5, 5a) of the dampening member (6).

3. Device according to claim 1, characterized in that the dampening member (6) is constituted of a pin made of steel wire having two loops (7, 7a) mounted for sliding over the stems of two screws (8, 8a) secured to the housing bottom (1), said looped portions (7, 7a) are joined together and have two elastic branches (5, 5a) defining a space between them in which is engaged the boss (4) integral with the mirror support (3).

*Fig-1*

II

Y

1

III

III

X

X₁

10

6

5ₐ

8

5

8ₐ

Y₁

II

*Fig-3*

1

Y-Y₁

3

2

$X\cdot X_1$

Fig. 2

Fig. 4